# FASCICULE DE BREVET EUROPEEN

(11) **EP 1 368 277 B1**
(45) Date de publication et mention de la délivrance du brevet: **01.06.2005**
(21) Numéro de dépôt: 02722348.6
(22) Date de dépôt: 14.03.2002
(51) Int. Cl.: C02F 1/52, B01D 21/08

(54) **TRAITEMENT DES EAUX PAR FLOCULATION LESTEE ET SEPARATION GRAVITAIRE A MODE DE FONCTIONNEMENT VARIABLE**
WASSERBEHANDLUNG DURCH BALLASTFLOCKUNG UND SCHWERKRAFTTRENNUNG MIT VARIABLER BETRIEBSART
METHOD AND UNIT FOR THE TREATMENT OF WATER BY BALLASTED FLOCCULATION AND GRAVITY SEPARATION WITH VARIABLE FUNCTION MODES

(30) Priorité: 15.03.2001 FR 0103567
(43) Date de publication de la demande: 10.12.2003
(73) Titulaire: OTV SA, 94417 Saint-Maurice Cedex (FR)
(72) Inventeur: BINOT, Patrick, F-77600 Rentilly par Bussy St Georges (FR); URSEL, Valéry, F-94410 Saint-Maurice (FR)
(74) Mandataire: Vidon, Patrice
(86) Numéro de dépôt international: PCT/FR2002/000920
(87) Numéro de publication internationale: WO 2002/074691

(56) Documents cités:
- EP-A- 0 150 646
- EP-A- 0 680 933
- EP-A- 0 767 143
- WO-A-97/35655
- WO-A-99/19261
- FR-A- 803 026
- FR-A- 2 146 533
- FR-A- 2 627 704
- US-A- 2 087 851
- US-A- 2 110 721
- US-A- 4 388 195
- US-A- 5 643 443

## Description

Il existe, dans le domaine du traitement des eaux, diverses techniques de traitement utilisant la gravité comme moyen de séparation entre une phase solide et une phase liquide.

Il existe notamment des techniques de décantation simple, avec ou sans lamelles destinées à accroître la surface de décantation, par lesquelles les matières décantables arrivant dans un flux d'eau brute sont séparées de l'eau traitée par décantation sans intervention de réactif chimique, à des vitesses de Hazen de décantation (débit traité divisé par la surface de décantation simple ou par la surface des lamelles éventuelles projetée sur un plan horizontal) de l'ordre de 1 à 2 mètres par heure.

Ce type de décantation permet de séparer les matières décantables en suspension dans l'eau brute. Cette technique ne permet pas de séparer de l'eau les matières colloïdales. Elle est économique en exploitation dans la mesure ou elle n'utilise pas de réactif chimique, mais nécessite de grandes surfaces de décantation du fait des basses vitesses de Hazen possibles, dès lors que le débit de pointe à traiter est important, par exemple en temps de pluie pour le traitement des eaux usées de réseaux unitaires.

Cette technique est fréquemment utilisée pour le traitement primaire des eaux usées, avant traitement biologique, par exemple par des biofiltres.

Il existe également des techniques dites de floculation décantation, dans lesquelles un réactif coagulant, usuellement constitué d'un sel de fer ou d'aluminium et/ou d'un polymère cationique, est ajouté à l'eau brute pour déstabiliser les colloïdes, puis un réactif floculant, usuellement constitué d'un polymère organique, est ajouté dans un bassin de floculation à l'eau coagulée pour constituer des flocs denses qui sont séparés de l'eau traitée dans une zone de décantation simple ou lamellaire similaire à la précédente.

Les temps de séjour dans le bassin agité de floculation sont de l'ordre de 10 à 30 minutes, et les vitesses de Hazen de décantation sont de l'ordre de 1 à 3 mètres par heure usuellement. Cette technique a l'avantage de rendre décantables les matières colloïdales, et donc d'améliorer le rendement de dépollution par rapport à la décantation simple.

Elle a le désavantage de consommer des réactifs et de nécessiter des surfaces de décantation importantes pour traiter des pointes comme celles de temps de pluie en traitement des eaux usées.

Il existe enfin une technique de décantation très rapide dite de floculation lestée par un lest granulaire, tel que le sable fin, permettant des vitesses de décantation de 50 à 200 mètres par heure.

Cette technique, décrite par exemple dans les brevets FR2719234 et FR2627704 de la Demanderesse, nécessite l'utilisation d'un réactif coagulant en amont de l'installation, pour déstabiliser les colloïdes et les former en microflocs, puis l'ajout d'un réactif floculant et de lest granulaire, pour former des flocs de forte densité à partir des microflocs coagulés.

Le réactif floculant et le lest granulaire, qui peut-être du micro-sable ou tout matériau granulaire de densité supérieure à celle du fluide à traiter, sont introduits dans une zone d'injection agitée, suivie d'une zone dite de maturation, destinée à éviter les départs directs de sable, réactif, ou eau non floculée, vers la zone de décantation qui suit la zone de maturation. L'ensemble des zones d'injection et de maturation est usuellement appelé en floculation lestée de matériau granulaire « zone de floculation ».
Dans la version la plus simple, les zones d'injection et de maturation sont ménagées au sein du même bassin agité, l'hydraulique du bassin étant telle qu'elle minimise le départ direct de matériau granulaire, réactif et eau non floculée vers la zone de décantation, par exemple en injectant sable et polymère de floculation du coté hydrauliquement amont du bassin de floculation, dont la partie aval sert de zone de maturation.

Dans une version préférée, les zones d'injection et de maturation sont matérialisées par des bassins différents et successifs, dans l'ordre suivant : bassin d'injection, puis bassin de maturation. Les temps hydrauliques de séjour sont alors typiquement de l'ordre de 1 minute dans le bassin d'injection et 2 à 6 minutes dans le bassin de maturation.

Cette technique a pour avantage à la fois de rendre décantable la part colloïdale de la pollution à traiter, et de minimiser les surfaces de décantation nécessaires au traitement des débits importants, tels les débits unitaires de temps de pluie. Cette technique a malheureusement le défaut de consommer en permanence des réactifs chimiques alors même que les charges de pollution à traiter, de temps sec par exemple, ne justifient plus de traiter la pollution colloidale: en effet, s'il est possible de diminuer fortement l'injection des réactifs chimiques, particulièrement du coagulant, l'arrêt total de l'injection des réactifs chimiques entraîne des pertes de lest qu'il est préférable d'éviter : en effet, les grains de sable les plus petits, qui ne sont plus emprisonnés dans des flocs physico-chimiques, ont des vitesses de décantation plus faibles que les flocs physico-chimiques de gros diamètre emprisonnant plusieurs grains de sable, obtenus lorsque du réactif est injecté.

Il est également possible de réaliser une floculation proche de la floculation lestée de matériau granulaire en recirculant vers la zone de floculation une partie des boues décantées dans la zone de décantation. Cette technique permet d'atteindre en fonctionnement stabilisé des vitesses de décantation importantes lorsque des réactifs chimiques sont injectés dans le système, et permet, durant les périodes où un traitement chimique n'est pas nécessaire, par exemple en temps sec à faible débit, d'arrêter l'injection de produits chimiques et de travailler en décantation simple sans consommer de réactif.

Cette technique a néanmoins le défaut de ne pas permettre d 'atteindre des vitesses de décantation aussi importantes que la décantation lestée avec un matériau granulaire, et de demander un temps de stabilisation non négligeable, et souvent non compatible avec l'arrivée soudaine des pluies ou des pointes de débit.

On connaît également une technique décrite par le document EP 0 767 143 qui concerne un procédé et une installation de dessablage et de décantation physico-chimique d'effluents urbains ou industriels. Selon cette technique, un écoulement brut d'eaux usées est normalement introduit dans un dessableur pendant des périodes de dessablage, pour y séparer un écoulement dessablé et du sable.

Pendant d'autres périodes, par exemple de pluie, on introduit un agent coagulant, du sable de lestage et un agent floculant, on fait circuler l'écoulement coagulé dans une zone intermédiaire de maturation puis, avec sensiblement tout le sable et les colloïdes ou particules y agrégés, dans le dessableur, où on sépare par décantation un effluent décanté que l'on évacue et des boues constituées du sable et de colloïdes et particules agrégés que l'on extrait.

La présente invention a pour objectif de proposer un procédé et une installation de traitement d'eau par floculation / séparation gravitaire permettant de résoudre ces problèmes de l'état de la technique.

Cet objectif est atteint grâce à l'invention qui concerne un procédé de traitement d'eau permettant le traitement physico-chimique de l'eau incluant une étape de floculation lestée d'un matériau granulaire de lestage plus dense que l'eau, suivie d'une étape de séparation gravitaire de l'eau traitée et des flocs, d'une étape de séparation du matériau granulaire recyclé à l'étape de floculation et des boues, lesdites boues étant envoyées vers une étape de traitement des boues, et comprend une étape consistant à passer d'un mode de fonctionnement par floculation lestée-séparation gravitaire utilisant des réactifs de coagulation et floculation à un mode de fonctionnement par séparation gravitaire simple, sans utilisation de réactifs de coagulation et floculation, le passage d'un mode de fonctionnement à un autre étant déterminé à partir d'au moins une information concernant l'eau à une étape quelconque de son traitement ou avant son traitement. Le procédé est défini dans la revendication 1.

On notera que le matériau granulaire peut être chimiquement inerte ou non. Il pourra être constitué de sable ou micro-sable, de grenat, de basalte, d'oxydes de fer, de magnétite...

Préférentiellement, ledit matériau granulaire de lestage est du micro-sable de diamètre effectif compris entre 30 et 200 micromètres, et ladite étape de séparation gravitaire est une étape de décantation.

D'une autre façon possible le matériau granulaire est du micro-sable de diamètre effectif compris entre 30 et 200 micromètres, et dans lequel ladite étape de séparation gravitaire est une étape de centrifugation, par exemple par effet de cyclonage ou de vortex..

Avantageusement, le procédé selon l'invention comprend de plus un mode intermédiaire de fonctionnement sans matériau granulaire de lestage, mais avec utilisation d'au moins un réactif chimique de coagulation-floculation.

Selon un aspect préférentiel de l'invention, la ou les vitesses basses du ou des agitateurs utilisées pour ne pas remettre de matériau granulaire de lest en suspension dans l'étape de floculation sont comprises entre 2,5 et 20 centimètres par seconde, de façon préférée entre toutes entre 5 et 10 centimètres par seconde.

Ladite étape consistant à passer d'un mode de fonctionnement à un autre est automatique.

L'invention concerne également tout installation spécialement conçue pour la mise en oeuvre d'un tel procédé, comprenant des moyens amont permettant l'injection d'au moins un réactif coagulant, au moins une zone de floculation avec au moins un moyen d'agitation, pouvant recevoir un matériau granulaire de lestage plus dense que l'eau tel que du micro-sable et au moins un réactif floculant, suivie d'une zone de décantation avec ou sans lamelles de décantation, séparant une eau décantée extraite en partie supérieure et des boues qui peuvent être soit envoyées directement au traitement des boues, soit hydrocyclonées pour en recycler le contenu éventuel en matériau granulaire,
caractérisée en ce qu'elle comprend des moyens de mesure d'eau moins une information concernant l'eau et des moyens permettant automatiquement :
■ lorsque ladite au moins une information concernant l'eau dépasse un certain seuil, de passer en mode de fonctionnement à floc lesté, les réactifs chimiques de coagulation-floculation étant injectés, l'eau circulant dans la zone de floculation, le matériau de lestage étant mis en suspension par l'effet conjugué de la vitesse de l'eau et de la mise en fonctionnement à la vitesse adéquate du ou des agitateurs, et étant recirculé dans la floculation après séparation des boues décantées le contenant par hydrocyclonage;
■ lorsque ladite au moins une information, ou une de leurs combinaisons, redevient inférieure à un certain seuil, de passer en mode de fonctionnement sans réactifs de coagulation-floculation ni lestage de floc, l'injection des réactifs étant stoppée, les agitateurs arrêtés ou mis en basse vitesse de fonctionnement, le matériau granulaire déposé au fond de la zone de floculation, l'eau à traiter passant dans la zone de floculation à une vitesse inférieure à la vitesse de remise en suspension du matériau granulaire, ou court-circuitant la partie inférieure de cette zone ou le matériau granulaire est déposé, les boues étant directement extraites sans hydrocyclonage, en ce que ladite au moins une information concernant l'eau permettant de décider dudit mode de fonctionnement est choisie parmi les informations suivantes : débit de l'eau à traiter, turbidité de l'eau à traiter, turbidité de l'eau traitée, Demande Chimique en Oxygène de l'eau à traiter, Carbone organique Total (C.O.T.), résistivité et en ce que lesdits moyens automatiques présentent :
   ■ au moins un capteur de débit, ou de turbidité, ou de concentration d'un paramètre caractéristique de l'eau traitée ou à traiter ;
   ■ un automatisme comparant le signal reçu du ou des capteurs à des seuils pré-établis commandant le passage à l'un ou l'autre des modes de fonctionnements prévus en arrêtant, mettant en fonctionnement à basse ou haute vitesse le ou les agitateurs de la zone de floculation, en commandant l'arrêt ou le fonctionnement des systèmes de préparation et injection de réactifs chimique et de séparation recyclage du matériau granulaire ou extraction directe des boues, en ouvrant ou fermant les moyens de by-pass de la zone de floculation ou de réduction des vitesses d'eau dans la partie basse de cette zone.

Préférentiellement, les moyens prévus permettent également un mode de fonctionnement intermédiaire lorsque ladite information concernant l'eau est comprise entre deux valeurs prédéterminées, ce mode de fonctionnement comportant l'injection de réactif sans usage du matériau de lestage, les réactifs étant injectés, le ou les agitateurs fonctionnant à une vitesse basse évitant la mise en suspension du matériau granulaire, et les boues étant extraites vers leur traitement avec ou sans hydrocyclonage préalable.

Egalement préférentiellement, la zone de floculation est divisée en une première zone d'injection, munie d'au moins un moyen d'agitation débrayable, dans laquelle peuvent être injecté le floculant et recyclé le matériau de lestage, et une deuxième zone de maturation, munie d'au moins un moyen d'agitation débrayable, dans laquelle peuvent être injecté un complément de floculant et de matériau de lestage, ces deux zones étant séparées par une cloison de séparation munie d'une ouverture inférieure permettant leur communication.

Avantageusement, l'installation comprend des moyens d'agrandissement automatique de l'ouverture inférieure de communication entre les zones d'injection et de maturation, lesdits moyens permettant de diminuer la vitesse de l'eau entre ces deux zones en dessous de la vitesse de remise en suspension du matériau de lestage utilisé, lorsque l'usage du matériau de lestage n'est pas demandé.

Avantageusement, la partie supérieure de la cloison de séparation des zones d'injection et de maturation peut être escamotée automatiquement, par cloison sur vérins ou vanne déversoir, pour permettre le by-pass de la partie inférieure de ces zones lorsque le mode de fonctionnement sans réactif est demandé.

Egalement avantageusement, l'ouverture inférieure de communication entre les zones d'injection et de maturation peut être fermée de façon à stocker le matériau granulaire dans ce compartiment uniquement, lorsque l'usage du matériau granulaire n'est pas demandé.

Selon une variante préférentielle, l'installation selon la présente invention comporte un moyen automatique de by-passer la zone de floculation lorsque le fonctionnement sans réactifs est demandé.

La présente invention permet de combiner dans un même système la possibilité d'un traitement physico-chimique à floc lesté à grande vitesse dans certaines conditions, telles que celles du temps de pluie, avec la possibilité d'un traitement physico-chimique avec réactif mais sans lest, par exemple en pointe de temps sec risquant de surcharger un traitement biologique aval , et avec la possibilité d'un traitement de décantation simple, sans usage de réactifs ni de lest, par exemple en moyenne et en creux de pollution de temps sec.

L'invention consiste fondamentalement à combiner, dans un système de traitement des eaux physico-chimique à floc lesté d'un lest granulaire, des moyens permettant d'asservir l'injection ou la non-injection de réactif à des seuils de débit d'eau ou de charges de pollution à traiter, et des moyens évitant la perte du lest granulaire lorsque les réactifs de coagulation et/ou injection ne sont plus injectés.

L'invention ainsi que les avantages qu'elle présente seront plus facilement compris grâce à la description qui va suite d'exemples non limitatifs de mise en oeuvre de celle-ci, en référence aux dessins dans lesquels :
- les figures 1a, 1 b,1c représentent un premier exemple de réalisation de l'invention selon trois modes de fonctionnement, à savoir :
   . mode de floculation décantatation lestée en figure 1a,
   . mode de floculation décantation sans lest et mode décantation simple sans réactif en figure 1b,
   . mode décantation simple en figure 1c.
- les figures 2a, 2b,2c rerésentent un second. exemple de réalisation de l'invention selon également ces trois modes de fonctionnement.

Sur ces figures, le chemin suivi par l'eau est indiqué par des flèches ondulée. N représente la vitesse de fonctionnement des aérateurs.

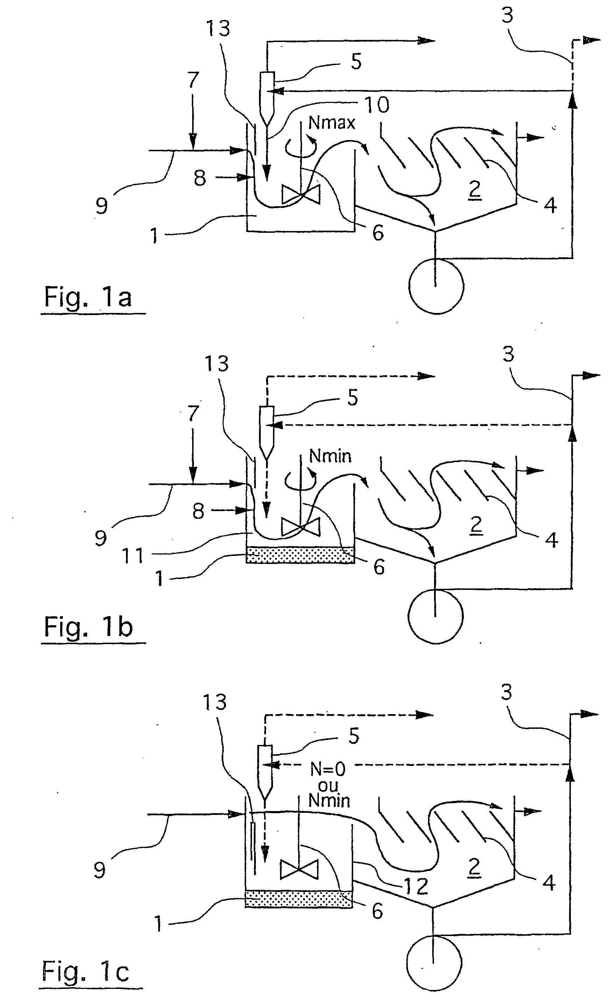

L'installation représentée en référence aux figures 1a,1b,1c est destinée au traitement d'une eau brute à débit ou à concentration en pollution très variable, par exemple d'eaux usées unitaires dont le débit d'arrivée varie dans un rapport de un en moyenne de temps sec à deux en pointe de temps sec, et à plus de dix en temps de forte pluie, ou encore d'eaux de surface à potabiliser, dont la turbidité est très variable en fonction par exemple des situations de crue.

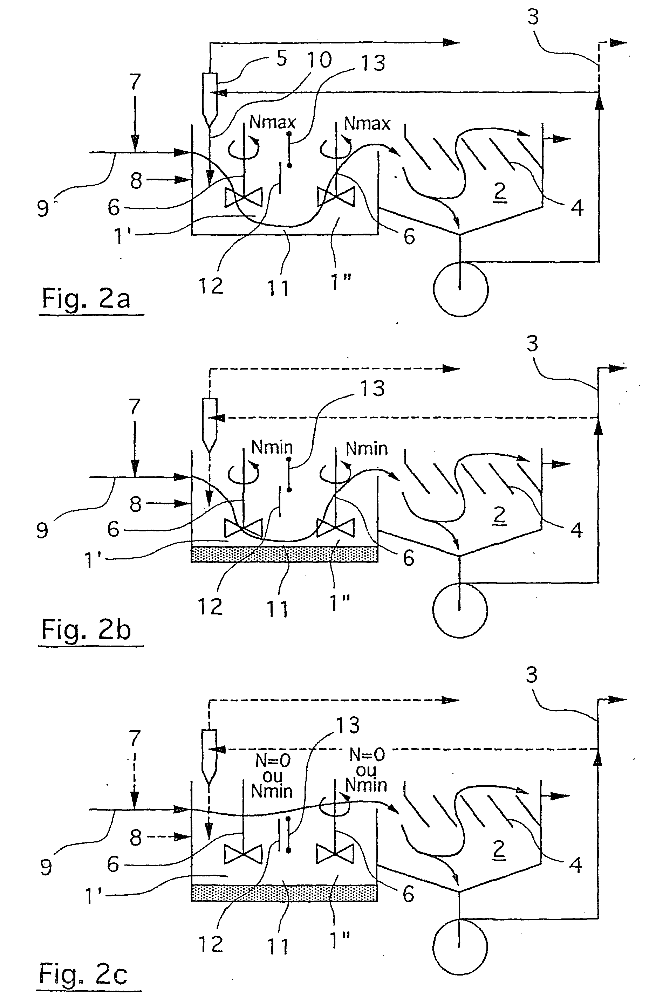

L'installation comporte, des moyens d'arrivée d'eau à traiter 9, une zone de coagulation en amont de laquelle peut être injecté un réactif coagulant 7, une zone d'injection-maturation dans laquelle peut être injecté un réactif floculant 8 et un lest tel que du microsable. Les zones de coagulation et d'injection-maturation sont réalisées soit en un seul bassin agité l.tel que représenté aux figures 1a,1b, 1c mais est préférentiellement réalisée en deux bassins 1',1" agités successifs, tel que représenté en figure 2 , un bassin 1' d'injection pouvant recevoir le réactif de floculation et le lest de micro-sable, suivi d'un bassin de maturation 1", pouvant éventuellement recevoir un complément de floculant.

Une zone de décantation 2 munie de lamelles 4 permet de décanter les matières décantables, qui peuvent être évacuées au stockage ou traitement des boues 3, ou recyclées en amont, soit directement vers la zone d'injection, soit par l'intermédiaire d'un dispositif de séparation 5 d'une part du lest, retourné dans la zone d'injection, et d'autre part des boues, évacuées au stockage ou traitement des boues.

Des moyens d'agitation 6 permettent, dans les zones d'injection et de maturation, de mélanger le réactif floculant, le sable et l'eau à grande vitesse, et maintenir en suspension les flocs lestés formés, afin de les laisser entraîner jusqu'à la zone de décantation.

Lorsque ces moyens d'agitation 6 fonctionnent à faible vitesse, ils permettent de laisser décanter le lest, tout en assurant un mélange des réactifs et de l'eau suffisant pour assurer la floculation et le maintien en suspension des flocs non lestés formés.

Enfin l'arrêt des moyens d'agitation 6 est possible, lors de l'arrêt de l'injection des réactifs chimiques, ou leur fonctionnement à très basse vitesse, permettant d'éviter les dépôts de matières en suspension dans la zone d'injection-maturation, sans remettre ou maintenir en suspension le lest contenu dans le ou les bassins.

Des moyens de mesure du débit et/ou de la charge de pollution (non représentés) sont prévus, permettant de connaître les débits et/ou charges de pollution traités ou devant être incessamment traités par le système.

Enfin, l'hydraulique du système est étudiée pour permettre, lorsque le débit à traiter descend au dessous d'une valeur prédéterminée, de recirculer le micro-sable dans la zone de floculation et de laisser ce micro-sable s'y déposer sans risque pour lui d'être entraîné vers la zone de décantation aval où il risquerait de se perdre en surverse lors d'un fonctionnement sans réactifs. Cette disposition peut être assurée soit en by-passant les cuves où le micro-sable est stocké, soit en diminuant la vitesse de rotation des agitateurs en dessous de la vitesse maintenant le sable en suspension et, éventuellement, en diminuant la vitesse de l'eau à proximité de la surface du sable déposé, soit une combinaison quelconque de ces moyens.

Le fonctionnement du système, donné à titre exemplatif, peut alors être le suivant :

### Traitement d'eaux usées de réseaux unitaires

En temps sec, considéré comme tel lorsque le débit mesuré en entrée est inférieur par exemple à 1,5Q (Q étant le débit moyen de temps sec de l'installation de traitement d'eau usée), l'injection de réactifs coagulant et floculant est arrêtée, et le débit est traité par décantation simple avant envoi au traitement biologique qui suit l'unité de décantation décrite.

Le micro-sable présent dans l'installation est décanté au fond de la zone d'injection pour l'essentiel, et au fond de la zone de maturation pour le reste.

L'hydraulique de la circulation d'eau est organisée pour éviter la remise en suspension de ce sable, par tout moyen connu de l'homme de l'art, tels que ceux décrits, de façon toutefois non limitative et donnée à titre exemplatif, dans les figures :
Dans les figures 1b et 2b, l'ouverture rectangulaire 11 assurant la communication hydraulique avec le bassin de floculation 1' (figure 1b) ou de maturation 1" (figure 2b) est dimensionnée de façon à assurer, lorsque le débit est inférieur au débit choisi pour fonctionner sans lest de micro-sable, une vitesse de balayage de la surface du sable déposé au fond des cuves largement inférieure à la vitesse de remise en suspension qui dépend du type et du diamètre du matériau de lestage utilisé et sera pour du micro-sable de 60 à 150 micromètres typiquement inférieure à 1 m /s et préférentiellement à 0,3 m /s. La hauteur de cette ouverture peut, si désiré, être ajustée à l'aide d'une cloison coulissante déplacée verticalement par vérins ou vis sans fin, de façon à diminuer la vitesse de balayage.
Dans les figures 1c et 2c, la zone de floculation est by-passée, par exemple, par l'ouverture d'une vanne-déversoir 13 au sommet de la cloison alimentant la zone de floculation dans le cas de la figure 1c, ou par l'ouverture d'une vanne-déversoir au sommet de la cloison 12 séparant les bassins d'injection et de maturation dans le cas de la figure 2, ou encore par passage du débit dans un canal latéral non représenté.

Dans ces divers cas, les agitateurs 6 peuvent être mis en fonctionnement à vitesse suffisamment basse pour assurer la remise ou le maintien en suspension des matières organiques en suspension, sans maintien ni remise en suspension du micro-sable, afin de limiter les risques de fermentation anaérobie au fond des cuves d'injection et de maturation. Les vitesses superficielles engendrées par l'agitation dans ce type de fonctionnement ( débit de pompage divisé par surface de la cuve) seront alors situées dans la gamme de 2,5cm/seconde à 20 cm/seconde suivant le type de sable et le type de traitement (eau usée primaire ou tertiaire, eau potable), typiquement entre de 5 à 10 cm/seconde.

La zone de décantation 2, de type lamellaire dans le cas décrit, est dimensionnée pour travailler, par exemple, à la vitesse au miroir (division du débit à traiter par la surface de la zone de décantation) de 25 m/h maximum sans réactifs.

Les boues produites sont alors évacuées directement vers le traitement des boues 3, sans passage obligé par l'hydrocyclone 5, puisque les boues ne contiennent pas de micro-sable

Lorsque le débit devient supérieur à 1,5Q (25 m/h en décantation), tout en restant inférieur à 2Q, par exemple (33 m/h en décantation), c'est à dire inférieur au débit de temps de pluie, le schéma indiqué en figure 1b ou, préférentiellement, en figure 2b, permet, par le démarrage de pompes d'injection asservies à des seuils de débit à traiter, d'injecter le réactif coagulant 7, en ligne en amont du bassin d'injection, ou dans un basse de coagulation spécifique non représenté sur le schéma, et le réactif floculant 8, par exemple un polymère, dans le bassin d'injection.

La vanne déversoir 13 permettant de by-passer les bassins d'injection et de maturation par leur partie supérieure est relevée pour que ces cuves ne puissent plus communiquer que par leurs parties inférieures

L'ensemble des bassins d'injection et de maturation fonctionne alors comme une cuve de floculation classique à deux zones successives, avec un temps de séjour de l'ordre de 15 minutes, et une agitation suffisante pour assurer le mélange de l'eau à traiter et du réactif de floculation, sans toutefois remettre beaucoup de micro-sable en suspension.

Le traitement est alors amélioré grâce à la floculation chimique de la pollution colloïdale, et la charge de pollution à traiter par le traitement biologique aval est maintenue à un niveau acceptable.

Ici également, les boues extraites de la zone de décantation peuvent être directement envoyées au traitement des boues 3 (il est aussi possible de les hydrocycloner en 5 si l'on désire en retirer les petites quantités de sable pouvant s'y trouver).

Si le débit redevient inférieur à, par exemple, à 1,2Q (20 m/h en décantation), les pompes à injection de réactif 8 sont stoppées, et le traitement redevient un traitement de décantation simple conforme aux schémas 1c ou 2c, jusqu'à ce que le débit remonte au dessus du seuil de 1,5Q.

Si, au contraire, le débit augmente au dessus de 2Q (33 m/h), considéré comme temps de pluie difficile à traiter par le traitement biologique, la vitesse des agitateurs 6 est augmentée jusqu'à l'optimum retenu pour le traitement par floculation-décantation lestée, le micro-sable est remis en suspension par l'action conjuguée du débit accru et de la vitesse d'agitation augmentée, l'hydrocyclonage du mélange de boues et de micro-sable est remis en fonctionnement pour séparer les boues, envoyées au traitement des boues, du sable recyclé en zone d'injection, et le tout fonctionne comme un floculateur décanteur à floc lesté, avec des vitesses de décantation pouvant atteindre 200 m/h, c'est à dire des débits de l'ordre de 12Q, et des temps de séjour en injection-maturation descendant à 2,5 minutes, compatibles avec ce type de traitement

L'eau traitée est alors envoyée au traitement biologique pour la portion de débit que celui ci peut accepter, et au milieu récepteur pour la portion de débit que le traitement biologique ne peut accepter.

Lorsque le débit redevient inférieur à, par exemple, 1,8Q, le système revient au mode de fonctionnement sans micro sable (baisse de vitesse des agitateurs, renvoi de tout le microsable vers la cuve d'injection puis arrêt de l'hydrocyclonage des boues, puis, si le débit descend encore, arrêt de l'injection de réactif et ouverture éventuelle de by-pass des cuves d'injection et maturation.

Des capteurs de concentration de pollution, ou des turbidimètres, par exemple, couplés à la mesure du débit, peuvent aider l'homme de l'art à affiner l'automatisation du passage d'un fonctionnement à un autre en fonction de la variation des charges totales de pollution à traiter.

### Traitement de potabilisation d'eaux à forte variation de turbidité :

Certaines eaux, comme les eaux karstiques, peuvent avoir en temps normal une très faible turbidité, de quelques NTU, permettant leur traitement direct par filtration, et connaître des épisodes brutaux de très forte turbidité (plus de 100 ou1000 NTU, par exemple), imposant un traitement de floculation décantation préalable à la filtration.

La floculation décantation lestée de sable est bien adaptée à ce type de scénario, grâce à sa capacité spécifique de mise en route très rapide en quelques minutes, mais un système permettant de fonctionner en filtration directe durant les périodes de faible turbidité sera utilement installé, afin de minimiser les consommations inutiles de réactif.

Dans ce cas, c'est par exemple un turbidimètre qui contrôlera le passage du système du fonctionnement en filtration directe (avec court-circuit ou non utilisation des cuves d'injection et de maturation, stockage du sable au fond de ces cuves, agitateurs arrêtés ou à faible vitesse, arrêt de l'injection de réactifs, circuit de recirculation et hydrocyclonage des boues arrêté) au passage en floculation décantation lestée (hydrocyclonage des boues et sable remis en service, fonctionnement normal en série des cuves d'injection et maturation, réactifs coagulant et floculant injectés, agitateurs en fonctionnement à pleine vitesse maintenant ou remettant le sable et les flocs en suspension) lors des épisodes turbides, et retour en filtration directe lorsque la basse turbidité redevient propice à ce fonctionnement.

Ces exemples ne constituent que la démonstration de l'intérêt du procédé plus général décrit, qui permet d'adapter le fonctionnement du même système en décantation simple sans réactif au fonctionnement en décantation lestée avec réactif, en passant éventuellement par un fonctionnement en floculation décantation physico-chimique classique, avec réactif mais sans lest, en fonction des flux hydrauliques et de pollution entrant et/ou des qualités d'eau à traiter ou traitée.

## Revendications

1. Procédé de traitement d'eau permettant le traitement physico-chimique de l'eau incluant une étape de floculation mise en oeuvre dans au moins une zone de floculation (11) avec des moyens d'agitation (6) lestée d'un matériau granulaire de lestage plus dense que l'eau, suivie d'une étape de séparation gravitaire par décantation lamellaire de l'eau traitée et des flocs, d'une étape de séparation du matériau granulaire recyclé à l'étape de floculation et des boues, lesdites boues étant envoyées vers une étape de traitement des boues, ledit procédé comprenant une étape consistant à passer d'un mode de fonctionnement par floculation lestée-séparation gravitaire utilisant des réactifs de coagulation et floculation à un mode de fonctionnement par séparation gravitaire simple, sans utilisation de réactifs de coagulation et floculation, le passage d'un mode de fonctionnement à un autre étant déterminé à partir d'au moins une information concernant l'eau à une étape quelconque de son traitement ou avant son traitement, **caractérisé en ce qu'**il comprend les étapes consistant à
- lorsque ladite au moins une information concernant l'eau dépasse un certain seuil, de passer en mode de fonctionnement à floc lesté, les réactifs chimiques de coagulation-floculation étant injectés, l'eau circulant dans la zone de floculation (1), le matériau de lestage étant mis en suspension par l'effet conjugué de la vitesse de l'eau et de la mise en fonctionnement à la vitesse adéquate des moyens d'agitation, et étant recirculé dans la floculation après séparation des boues décantées le contenant par hydrocyclonage (5) ;
- lorsque ladite au moins une information, ou une de leurs combinaisons, redevient inférieure à un certain seuil, de passer en mode de fonctionnement sans réactifs de coagulation-floculation ni lestage de floc, l'injection des réactifs étant stoppée, le ou les moyens d'agitation (6) arrêtés ou mis en basse vitesse de fonctionnement, le matériau granulaire déposé au fond de la zone de floculation, l'eau à traiter passant dans la zone de floculation (1) à une vitesse inférieure à la vitesse de remise en suspension du matériau granulaire, ou by-passant la partie inférieure de cette zone ou le sable est déposé, les boues étant directement extraites sans hydrocyclonage,
et **en ce que** ladite au moins une information concernant l'eau permettant de décider dudit mode de fonctionnement est choisie parmi les informations suivantes : débit de l'eau à traiter, turbidité de l'eau à traiter, turbidité de l'eau traitée. Demande Chimique en Oxygène de l'eau à traiter, Carbone Organique Total (C.O.T.), résistivité,
et **en ce que** ledit procédé est mis en oeuvre à l'aide de moyens automatiques présentant :
■ au moins un capteur de débit, ou de turbidité, ou de concentration d'un paramètre caractéristique de l'eau traitée ou à traiter ;
■ un automatisme comparant le signal reçu du ou des capteurs à des seuils pré-établis commandant le passage à l'un ou l'autre des modes de fonctionnements prévus en arrêtant, mettant en fonctionnement à basse ou haute vitesse les moyens d'agitation (6) de la zone de floculation (1), en commandant l'arrêt ou le fonctionnement des systèmes de préparation et injection de réactifs chimiques et de séparation recyclage du matériau granulaire ou extraction directe des boues, en ouvrant ou fermant les moyens de by-pass de la zone de floculation (1) ou de réduction des vitesses d'eau dans la partie basse de cette zone.

2. Procédé selon la revendication 1 **caractérisé en ce que** lesdits moyens d'agitation (6) sont constitués d'au moins un agitateur.

3. Procède selon l'une quelconque des revendications 1 ou 2, **caractérisé en ce qu'**il comprend un mode intermédiaire de fonctionnement sans matériau granulaire de lestage, mais avec utilisation d'au moins un réactif chimique de coagulation-floculation.

4. Procède selon l'une quelconque des revendications 1 à 3, **caractérisé en ce que** la ou les vitesses basses des moyens d'agitation (6) utilisées pour ne pas remettre de matériau granulaire de lest en suspension dans l'étape de floculation sont comprises entre 2,5 et 20 centimètres par seconde.

5. Procédé selon la revendication 1, **caractérisé en ce que** la ou les vitesses basses des moyens d'agitation utilisées pour ne pas remettre de matériau granulaire de lestage en suspension dans l'étape de floculation sont comprises entre 5 et 10 centimètres par seconde.

6. Procédé selon l'une quelconque des revendications 1 à 5, **caractérisé en ce que** ladite étape consistant à passer d'un mode de fonctionnement à un autre est automatique.

7. Installation spécialement conçue pour la mise en oeuvre du procédé selon la revendication 6, comprenant des moyens amont (7) pour l'injection d'au moins un réactif coagulant, au moins une zone de floculation (11) avec des moyens d'agitation (6), pour recevoir un matériau granulaire de lestage plus dense que l'eau tel que du micro-sable et au moins un réactif floculant, suivie d'une zone de décantation (2) avec ou sans lamelles (4) de décantation, séparant une eau décantée extraite en partie supérieure et des boues qui sont soit envoyées directement au traitement des boues, soit hydrocyclonées (5) pour en recycler le contenu éventuel en matériau granulaire,
**caractérisée en ce qu'**elle comprend des moyens de mesure d'au moins une information concernant l'eau et des moyens automatiques permettant :
■ lorsque ladite au moins une information concernant l'eau dépasse un certain seuil, de passer en mode de fonctionnement à floc lesté, les réactifs chimiques de coagulation-floculation étant injectés, l'eau circulant dans la zone de floculation (1), le matériau de lestage étant mis en suspension par l'effet conjugue de la vitesse de l'eau et de la mise en fonctionnement à la vitesse adéquate des moyens d'agitation, et étant recirculé dans la floculation après séparation des boues décantées le contenant par hydrocyclonage (5) ;
■ lorsque ladite au moins une information, ou une de leurs combinaisons, redevient inférieure à un certain seuil, de passer en mode de fonctionnement sans réactifs de coagulation-floculation ni lestage de floc, l'injection des réactifs étant stoppée, les moyens d'agitation (6) arrêtés ou mis en basse vitesse de fonctionnement, le matériau granulaire déposé au fond de la zone de floculation, l'eau à traiter passant dans la zone de floculation (1) à une vitesse inférieure à la vitesse de remise en suspension du matériau granulaire, ou by-passant la partie inférieure de cette zone ou le sable est déposé, les boues étant directement extraites sans hydrocyclonage ;
lesdits moyens de mesure étant choisis dans le groupe constitué par les moyens de mesure du débit de l'eau à traiter, turbidité de l'eau à traiter, turbidité de l'eau traitée. Demande Chimique en Oxygène de l'eau à traiter, Carbone Organique Total (C.O.T.), résistivité,
lesdits moyens automatiques présentant :
■ au moins un capteur de débit, ou de turbidité, ou de concentration d'un paramètre caractéristique de l'eau traitée ou à traiter ;
■ un automatisme comparant le signal reçu du ou des capteurs à des seuils pré-établis commandant le passage à l'un ou l'autre des modes de fonctionnements prévus en arrêtant, mettant en fonctionnement à basse ou haute vitesse les moyens d'agitation (6) de la zone de floculation (1), en commandant l'arrêt ou le fonctionnement des systèmes de préparation et injection de réactifs chimiques et de séparation recyclage du matériau granulaire ou extraction directe des boues, en ouvrant ou fermant les moyens de by-pass de la zone de floculation (1) ou de réduction des vitesses d'eau dans la partie basse de cette zone.

8. Installation selon la revendication 7 **caractérisée en ce que** les moyens prévus permettent également un mode de fonctionnement intermédiaire lorsque ladite information concernant l'eau est comprise entre deux valeurs prédéterminées, ce mode de fonctionnement comportant l'injection de réactif sans usage du matériau de lestage, les réactifs étant injectés, les moyens d'agitation (6) fonctionnant à une vitesse basse évitant la mise en suspension du matériau granulaire, et les boues étant extraites vers leur traitement avec ou sans hydrocyclonage préalable.

9. Installation suivant la revendication 7 ou 8, **caractérisée en ce que** la zone de floculation (1) est divisée en une première zone d'injection (1') munie d'au moins un moyen d'agitation débrayable (6), et de moyens pour l'injection de floculant, et une deuxième zone de maturation (1") munie d'au moins un moyen d'agitation débrayable (6) et de moyens d'injection d'un complément de floculant et de matériau de lestage, ces deux zones étant séparées par une cloison de séparation (12) munie d'une ouverture inférieure (11) permettant leur communication.

10. Installation suivant la revendication 9, caraetérisée en ce qu'elle comprend des moyens d'agrandissement automatique de l'ouverture inférieure (11) de communication entre les zones d'injection (1') et de maturation (1"), lesdits moyens permettant de diminuer la vitesse de l'eau entre ces deux zones en dessous de la vitesse de remise en suspension du matériau de lestage utilisé, lorsque l'usage du matériau de lestage n'est pas demandé.

11. Installation suivant la revendication 10, **caractérisée en ce que** la partie supérieure de la cloison de séparation (12) des zones d'injection (1') et de maturation (1") est escamotable automatiquement, par cloison sur vérins ou vanne déversoir, pour permettre le by-pass de la partie inférieure de ces zones lorsque le mode de fonctionnement sans réactif est demandé.

12. Installation selon la revendication 11, dans laquelle l'ouverture inférieure (11) de communication entre les zones d'injection (1') et de maturation (1") est fermée de façon à stocker le matériau granulaire dans ce compartiment uniquement, lorsque l'usage du matériau granulaire n'est pas demandé.

13. Installation selon l'une quelconque des revendications 7 à 12, **caractérisée en ce qu'**elle comporte un moyen automatique de by-passer la zone de floculation (1') lorsque le fonctionnement sans réactifs est demandé.

## Patentansprüche

1. Verfahren zur Wasserbehandlung durch chemisch-physikalische Behandlung des Wassers, das eine Flockungsphase umfasst, die in mindestens einer Flockungszone (1) realisiert wird, die mit Rührmitteln (6) ausgestattet ist und bei der ein körniges Material zur Beschwerung, das dichter als Wasser ist, zugesetzt wird, anschließend erfolgt eine Abscheidungsphase (Schwerkraftabscheidung) durch Dekantieren des behandelten Wassers und der Flocken mittels Lamellen, dann eine Phase der Abscheidung des in die Flockungsphase rückgeführten körnigen Materials und der Schlämme, wobei die besagten Schlämme einer Schlammbehandlungsphase zugeführt werden und das besagte Verfahren eine Phase umfasst, bei der von einem Betriebsmodus durch beschwerte Flockung/Schwerkraftabscheidung unter Verwendung von Koagulations- und Flockungsmitteln zu einem Betriebsmodus durch einfache Schwerkraftabscheidung ohne Verwendung von Koagulations- und Flockungsmitteln übergegangen wird, wobei der Übergang von einem zum anderen Betriebsmodus auf der Grundlage mindestens einer Information bezüglich des Wassers in einer beliebigen Phase der Behandlung oder vor der Behandlung bestimmt wird, und der **dadurch gekennzeichnet ist, dass** er folgende Phasen umfasst:
- wenn die besagte mindestens eine Information bezüglich des Wassers einen bestimmten Schwellenwert überschreitet, wird zum Betriebsmodus mit beschwerten Flocken übergegangen, wobei die chemischen Koagulations-/Flockungsmittel eingespritzt werden, das Wasser in der Flockungszone (1) zirkuliert, das beschwerende Material durch die vereinte Wirkung der Geschwindigkeit des Wassers und der Inbetriebnahme der Rührmittel mit angemessener Geschwindigkeit in Suspension gebracht wird, und nach Abscheidung der abgesetzten Schlämme, die es enthalten, durch Hydrozyklonierung (5) in die Flockungszone rückgeführt wird;
- wenn die besagte mindestens eine Information oder eine ihrer Kombinationen wieder unter einen bestimmten Schwellenwert sinkt, wird zum Betriebsmodus ohne Koagulations-/Flockungsmittel und ohne Beschwerung der Flocken übergegangen, wobei das Einspritzen dieser Reagenzien gestoppt wird, das oder die Rührmittel (6) angehalten oder auf geringe Betriebsgeschwindigkeit eingestellt werden, sich das körnige Material am Boden der Flockungszone absetzt, das zu behandelnde Wasser mit einer Geschwindigkeit in die Flockungszone (1) gelangt, die geringer ist, als die zur Resuspension des körnigen Materials notwendige Geschwindigkeit oder um den unteren Teil dieser Zone, wo sich der Sand abgesetzt hat, herumgeleitet wird, und die Schlämme direkt ohne Hydrozyklonierung extrahiert werden;
er ist ferner **dadurch gekennzeichnet, dass** die besagte mindestens eine Information bezüglich des Wassers, die es ermöglicht, über den besagten Betriebsmodus zu entscheiden, aus den folgenden Informationen ausgewählt wird: Durchflussmenge des zu behandelnden Wassers, Trübung des zu behandelnden Wassers, Trübung des behandelten Wassers, chemischer Sauerstoffbedarf des zu behandelnden Wassers, organisch gebundener Gesamtkohlenstoff (C_{ges}), spezifischer Widerstand;
er ist ferner **dadurch gekennzeichnet, dass** das besagte Verfahren mit Hilfe von automatischen Mitteln realisiert wird, die Folgendes aufweisen:
• mindestens eine Sonde zur Messung der Durchflussmenge, der Trübung oder der Konzentration eines charakteristischen Parameters des behandelten oder zu behandelnden Wassers;
• eine Automatik, die das von der oder von den Sonde/n erhaltene Signal mit den vorher festgelegten Schwellenwerten, die den Übergang zum einen oder anderen vorgesehenen Betriebsmodus steuern, vergleicht, und die Rührmittel (6) in der Flockungszone (1) anhält, mit geringer oder hoher Geschwindigkeit in Betrieb setzt, und das Anhalten oder den Betrieb der Vorbereitungs- und Einspritzsysteme für die Reagenzien und die Abscheidung/Rückführung des körnigen Materials oder die direkte Extraktion der Schlämme steuert, und die Mittel zur Umgehung der Flockungszone (1) oder zur Reduzierung der Geschwindigkeit des Wassers im unteren Teil dieser Zone öffnet oder schließt.

2. Verfahren gemäß Anspruch 1, das **dadurch gekennzeichnet ist, dass** die besagten Rührmittel (6) aus mindestens einem Rührwerk bestehen.

3. Verfahren gemäß einem der Ansprüche 1 oder 2, das **dadurch gekennzeichnet ist, dass** es einen Zwischenbetriebsmodus ohne körniges Material zur Beschwerung aber unter Verwendung mindestens eines chemischen Koagulations-/Flockungsmittels umfasst.

4. Verfahren gemäß einem der Ansprüche 1 bis 3, das **dadurch gekennzeichnet ist, dass** die geringe Geschwindigkeit oder die geringen Geschwindigkeiten der Rührmittel (6), die eingestellt wird oder werden, damit das körnige Material zur Beschwerung während der Flockungsphase nicht wieder in Suspension gebracht wird, zwischen 2,5 und 20 Zentimetern pro Sekunde beträgt oder betragen.

5. Verfahren gemäß Anspruch 4, das **dadurch gekennzeichnet ist, dass** die geringe Geschwindigkeit oder die geringen Geschwindigkeiten der Rührmittel (6), die eingestellt wird oder werden, damit das körnige Material zur Beschwerung während der Flockungsphase nicht wieder in Suspension gebracht wird, zwischen 5 und 10 Zentimetern pro Sekunde beträgt oder betragen.

6. Verfahren gemäß einem der Ansprüche 1 bis 5, das **dadurch gekennzeichnet ist, dass** die besagte Phase, in der von einem zum anderen Betriebsmodus übergegangen wird, automatisch abläuft.

7. Speziell entwickelte Anlage zur Durchführung des Verfahrens gemäß Anspruch 6, die Folgendes umfasst: Zugabemittel (7) zum Einspritzen mindestens eines Koagulationsmittels, mindestens eine Flockungszone (1) mit Rührmitteln (6) zur Aufnahme eines körnigen Materials zur Beschwerung, das dichter als Wasser ist, wie z.B. Mikrosand, und mindestens eines Flockungsmittels, gefolgt von einer Dekantierzone (2) mit oder ohne Dekantierlamellen (4) zur Trennung des im oberen Teil extrahierten dekantierten Wassers von den Schlämmen, die entweder direkt der Schlammbehandlung oder der Hydrozyklonierung zugeführt werden (5), um das eventuell darin enthaltene körnige Material rückzugewinnen,
wobei die Anlage **dadurch gekennzeichnet ist, dass** sie Mittel zur Messung mindestens einer Information bezüglich des Wassers und automatische Mittel umfasst, die es erlauben:
• zum Betriebsmodus mit beschwerten Flocken überzugehen, wenn die besagte mindestens eine Information bezüglich des Wassers einen bestimmten Schwellenwert überschreitet, wobei die chemischen Koagulations-/Flockungsmittel eingespritzt werden, das Wasser in der Flockungszone (1) zirkuliert, das beschwerende Material durch die vereinte Wirkung der Geschwindigkeit des Wassers und der Inbetriebnahme der Rührmittel mit angemessener Geschwindigkeit in Suspension gebracht wird, und das nach Abscheidung der abgesetzten Schlämme, die es enthalten, durch Hydrozyklonierung (5) in die Flockungszone rückgeführt wird;
• zum Betriebsmodus ohne Koagulations-/Flockungsmittel und ohne Beschwerung der Flocken überzugehen, wenn die besagte mindestens eine Information oder eine ihrer Kombinationen wieder unter einen bestimmten Schwellenwert sinkt, wobei das Einspritzen dieser Mittel gestoppt wird, die Rührmittel (6) angehalten oder auf geringe Betriebsgeschwindigkeit eingestellt werden, sich das körnige Material am Boden der Flockungszone absetzt, das zu behandelnde Wasser mit einer Geschwindigkeit in die Flockungszone (1) gelangt, die geringer ist, als die zur Resuspension des körnigen Materials notwendige Geschwindigkeit oder um den unteren Teil dieser Zone, wo sich der Sand abgesetzt hat, herumgeleitet wird, und die Schlämme direkt ohne Hydrozyklonierung extrahiert werden;
dabei sind die besagten Messmittel ausgewählt aus der Gruppe bestehend aus: Mitteln zur Messung der Durchflussmenge des zu behandelnden Wassers, der Trübung des zu behandelnden Wassers, der Trübung des behandelten Wassers, des chemischen Sauerstoffbedarfs des zu behandelnden Wassers, des organisch gebundenen Gesamtkohlenstoffs (C_{ges}), des spezifischen Widerstands; die besagten automatischen Mittel weisen folgendes auf:
• mindestens ein Sonde zur Messung der Durchflussmenge, der Trübung oder der Konzentration eines charakteristischen Parameters des behandelten oder zu behandelnden Wassers;
• eine Automatik, die das von der oder von den Sonden erhaltene Signal mit den vorher festgelegten Schwellenwerten, die den Übergang zum einen oder anderen vorgesehenen Betriebsmodus steuern, vergleicht, und die Rührmittel (6) in der Flockungszone (1) anhält, mit geringer oder hoher Geschwindigkeit in Betrieb setzt, das Anhalten oder die Inbetriebnahme der Vorbereitungs- und Einspritzsysteme der Reagenzien und der Abscheidung/Rückführung des körnigen Materials oder das direkten Extrahieren der Schlämme steuert, und die Mittel zur Umgehung der Flockungszone (1) oder der Reduzierung der Geschwindigkeit des Wassers im untern Teil dieser Zone öffnet oder schließt.

8. Anlage gemäß Anspruch 7, die **dadurch gekennzeichnet ist, dass** die vorgesehenen Mittel auch einen Zwischenbetriebsmodus ermöglichen, wenn die besagte Information bezüglich des Wassers zwischen zwei vorher festgelegten Werten liegt, wobei bei diesem Betriebsmodus die Reagenzien ohne Verwendung des Materials zur Beschwerung eingespritzt werden, die Rührmittel (6) mit geringer Geschwindigkeit betrieben werden und so die Suspension des körnigen Materials verhindern und die Schlämme mit oder ohne vorherige Hydrozyklonierung in Richtung Behandlungszone extrahiert werden.

9. Anlage gemäß Anspruch 7 oder 8, die **dadurch gekennzeichnet ist, dass** die Flockungszone (1) unterteilt ist in eine erste Einspritzzone (1'), die mit mindestens einem ausschaltbaren Rührmittel (6) und mit Mitteln zum Einspritzen des Flockungsmittels ausgestattet ist, und in eine zweite Reifezone (1"), die mit mindestens einem ausschaltbaren Rührmittel (6) und Mitteln zum Einspritzen eines Flockungsmittelzusatzes und des Materials zur Beschwerung versehen ist, wobei diese beiden Zonen durch eine Trennwand (12) voneinander getrennt sind, die mit einer tiefliegenden Öffnung (11) versehen ist, die deren Verbindung ermöglicht.

10. Anlage gemäß Anspruch 9, die **dadurch gekennzeichnet ist, dass** sie Mittel zur automatischen Vergrößerung der tiefliegenden Öffnung (11) zur Verbindung der Einspritzzone (1') mit der Reifezone (1") aufweist, und durch die besagten Mittel die Geschwindigkeit des Wassers zwischen diesen beiden Zonen unter die zur Resuspension des verwendeten Materials zur Beschwerung notwendige Geschwindigkeit gesenkt werden kann, falls die Verwendung des Materials zur Beschwerung nicht erforderlich ist.

11. Anlage gemäß Anspruch 10, die **dadurch gekennzeichnet ist, dass** der obere Teil der Trennwand (12) zwischen der Einspritzzone (1') und der Reifezone (1") durch eine Hubvorrichtung oder Stauklappe automatisch entfernbar ist, um die Umgehung des unteren Teils dieser Zonen zu ermöglichen, falls der Betriebsmodus ohne Reagenzien erforderlich ist.

12. Anlage gemäß Anspruch 11, in der die tiefliegende Öffnung (11) zur Verbindung der Einspritzzone (1') und der Reifezone (1 ") geschlossen ist, damit das körnige Material ausschließlich in dieser Kammer abgelagert wird, falls die Verwendung von körnigem Material nicht erforderlich ist.

13. Anlage gemäß einem der Ansprüche 7 bis 12, die **dadurch gekennzeichnet ist, dass** sie ein automatisches Mittel zur Umgehung der Flockungszone (1') umfasst, wenn ein Betrieb ohne Reagenzien erforderlich ist.

## Claims

1. Method for treating water enabling the physico-chemical treatment of water to be carried out, including a flocculation step put into operation in at least one flocculation zone (11) with means of agitation (6), ballasted with a granular ballasting material denser than water, followed by a gravitational separation step by lamellar settling of the treated water and flocs, a step of separating the granular material recycled to the flocculation step and sludges, the said sludges being conveyed to a sludge-treatment step, the said method comprising a step consisting of passing from an operational mode by ballasted flocculation-gravitational separation using coagulating and flocculating reagents to an operational mode by simple gravitational separation, without the use of coagulating and flocculating reagents, passage from one operational mode to another being determined from at least one item of information concerning the water at any step of its treatment or before its treatment, **characterized in that** it comprises steps consisting of
- when the said at least one item of information concerning the water exceeds a certain threshold, of passing into an operational mode with ballasted floc, chemical and coagulating-flocculating reagents being injected, water circulating in the flocculation zone (1), the ballasting material being suspended by the combined effect of the speed of the water and application of the means of agitation at an adequate speed, and being recirculated for flocculation after separating the settled sludges containing it by hydrocycloning (5);
- when the said at least one item of information, or one of the combinations of such information, becomes again lower than a certain threshold, of passing into an operational mode without coagulating-flocculating reagents or floc ballasting, injection of reagents being stopped, the means of agitation (6) being stopped or set at a low operational speed, the granular material being deposited at the bottom of the flocculation zone, the water to be treated passing into the flocculation zone (1) at a speed less than the speed for re-suspending granular material, or by-passing the lower part of this zone where sand is deposited, the sludges being directly extracted without hydrocycloning,
and **in that** the said at least one item of information concerning the water makes it possible to decide on which operational mode is chosen from the following items of information : flow rate of the water to be treated, turbidity of the water to be treated, turbidity of the treated water, Chemical Oxygen Demand of the water to be treated, Total Organic Carbon (T.O.C.), resistivity,
and **in that** the said method is operated with the aid of automatic means having :
• at least one sensor for the flow rate, or turbidity, or concentration of a parameter characteristic of the treated water or of the water to be treated;
• an automatic device comparing the signal received from the sensor or sensors with pre-established thresholds ordering the passage to one or other of the provided operational modes by stopping, putting into operation the means of agitation (6) of the flocculation zone (1) at a low or high speed, by ordering the stopping or operation of systems for preparing and injecting chemical reagents and for the recycling separation of granular material or for directly extracting sludges, by opening or closing the means for by-passing the flocculation zone (1) or by reducing the speeds of the water in the lower part of this zone.

2. Method according to claim 1, **characterized in that** the said means of agitation (6) consists of at least one stirrer.

3. Method according to either of claims 1 or 2, **characterized in that** it includes an intermediate operational mode without granular ballasting material, but with use of at least one coagulating-flocculating chemical reagent.

4. Method according to any one of claims 1 to 3, **characterized in that** the low speed or speeds of the means of agitation (6) used so as not to re-suspend the granular ballasting material in the flocculation step is or are between 2.5 and 20 centimetres per second.

5. Method according to claim 4, **characterized in that** the low speed or speeds of the means of agitation used so as not to re-suspend granular ballasting material in the flocculation step is or are between 5 and 10 centimetres per second.

6. Method according to any one of claims 1 to 5,
**characterized in that** the said step consisting of passing from one operational mode to another is automatic.

7. Specially designed installation for implementing the method according to claim 6, comprising upstream means (7) for injecting at least one coagulating reagent, at least one flocculation zone (11) with means of agitation (6), for receiving a granular ballasting material that is denser than water such as micro-sand and at least one flocculating reagent, followed by a settling zone (2) with or without settling lamellae (4), separating an extracted decanted water in the upper part and sludges that are conveyed directly to the sludge treatment, or are hydrocycloned (5)in order to recycle any granular material that may be contained therein,
**characterized in that** it includes means for measuring at least one item of information concerning the water and automatic means permitting :
• when the said at least one item of information concerning the water exceeds a certain threshold, of passing into an operational mode with ballasted floc, chemical coagulating-flocculating reagents being injected, water circulating in the flocculating zone (1) the ballasting material being suspended by the combined effect of the speed of the water and the application of the means of agitation at an adequate speed, and being recirculated for flocculation after separating the settled sludges contained in it by hydrocycloning (5);
• when the said at least one item of information, or one of the combinations of such information becomes again lower than a certain threshold, of passing to an operational mode without coagulating-flocculating reagents or floc ballasting, the injection of reagents being stopped, the means of agitation (6) stopped or set at a low operational speed, the granular material being deposited at the bottom of the flocculation zone, the water to be treated passing into the flocculation zone (1) at a speed less than the speed for re-suspending the granular material, or bypassing the lower part of this zone where sand is deposited, sludges being directly extracted without hydrocycloning;
the said means of measurement being chosen from the group consisting of means for measuring the flow rate of the water to be treated, the turbidity of the water to be treated, the turbidity of the treated water, the Chemical Oxygen Demand of the water to be treated, the total organic carbon (T.O.C.), the resistivity,
the said automatic means having :
• at least one sensor for the flow rate, or turbidity, or the concentration of a parameter characteristic of the treated water or water to be treated;
• an automatic device comparing the signal received from the sensor or sensors with pre-established thresholds ordering the passage to one or other of the provided operational modes by stopping, putting into operation the means of agitation (6) of the flocculation zone (1) at a low or high speed, by ordering the stopping or operation of the system for preparing and injecting chemical reagents and for the recycling separation of granular material or the direct extraction of sludges, by opening or closing the means for bypassing the flocculation zone (1) or by reducing the speeds of water in the lower part of this zone.

8. Installation according to claim 7 **characterized in that** the means provided also permit an intermediate operational mode when the said item of information concerning the water lies between two predetermined values, this operational mode comprising the injection of reagents without the use of ballasting material, the reagents being injected, the means of agitation (6) operating at a low speed preventing the suspension of granular material, and the sludges being extracted for their treatment with or without prior hydrocycloning.

9. Installation according to claims 7 or 8, **characterized in that** the flocculation zone (1) is divided into a first injection zone (1') provided with at least one disengageable means of agitation (6), and means for injecting flocculent, and a second maturing zone (1") provided with at least one disengageable means of agitation (6) and means for injecting a complement of flocculent and ballasting material, these two zones being separated by a separating partition (12) provided with a lower opening (11) enabling them to communicate with each other.

10. Installation according to claim 9, **characterized in that** it comprises means for automatically increasing the size of the lower opening (11) for communication between the injection (1') and maturing (1") zones, the said means making it possible to reduce the speed of the water between these two zones below the speed at which the ballasting material used is re-suspended, when use of the ballasting material is not required.

11. Installation according to claim 10, **characterized in that** the upper part of the separating partition (12) between the injection (1') and maturing (1") zones can be automatically retracted, by a partition on jacks or a bypass valve, so as to enable the lower part of these zones to be bypassed when the operational mode without reagents is required.

12. Installation according to claim 11, in which the lower opening (11) for communication between the injection (1') and maturing (1") zones is closed so as to store the granular material only in this compartment, when the use of granular material it not required.

13. Installation according to any one of claims 7 to 12, **characterized in that** it includes an automatic means for bypassing the flocculation zone (1') when it is required to operate without reagents.
